(19) **Europäisches Patentamt European Patent Office Office européen des brevets**

(11) **EP 4 406 794 A1**

(12) **EUROPEAN PATENT APPLICATION**
published in accordance with Art. 153(4) EPC

(43) Date of publication:
**31.07.2024 Bulletin 2024/31**

(21) Application number: **21961649.7**

(22) Date of filing: **25.10.2021**

(51) International Patent Classification (IPC):
**B60W 30/08** (2012.01)     **G08G 1/16** (2006.01)
**G05D 1/02** (2020.01)

(52) Cooperative Patent Classification (CPC):
**B60W 30/08; G05D 1/02; G08G 1/16**

(86) International application number:
**PCT/CN2021/126059**

(87) International publication number:
**WO 2023/070258 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
  • **WANG, Xinyu
    Shenzhen, Guangdong 518129 (CN)**

  • **ZHAO, Shijie
    Shenzhen, Guangdong 518129 (CN)**
  • **DAI, Zhengchen
    Shenzhen, Guangdong 518129 (CN)**
  • **SHE, Xiaoli
    Shenzhen, Guangdong 518129 (CN)**

(74) Representative: **Isarpatent
    Patent- und Rechtsanwälte
    Barth Hassa Peckmann & Partner mbB
    Friedrichstraße 31
    80801 München (DE)**

(54) **TRAJECTORY PLANNING METHOD AND APPARATUS FOR VEHICLE, AND VEHICLE**

(57)     This application provides a vehicle track planning method and apparatus, and a vehicle. The method includes: obtaining a first predicted track of an obstacle; when the obstacle is a game target, generating a feasible track cluster of the obstacle based on the first predicted track and information about a scenario of interaction between the obstacle and a vehicle; selecting a second predicted track from the feasible track cluster, where a cost value of the second predicted track is greater than a preset threshold; generating a spatial-temporal constraint of the vehicle based on the second predicted track; and planning a traveling track of the vehicle based on the spatial-temporal constraint of the vehicle. In this case, the vehicle plans the traveling track of the ego-vehicle based on the spatial-temporal constraint, so that the traveling track planned by the ego-vehicle can be as comfortable as possible on a premise that safe traveling is maintained.

FIG. 2

**Description**

**TECHNICAL FIELD**

This application relates to the field of intelligent driving technologies, and in particular, to a vehicle track planning method and apparatus, and a vehicle.

**BACKGROUND**

Safety is the primary objective and pursuit for self-driving vehicle. Usually, a self-driving system is comprising three modules based on functions: a sensing module, a planning module, and a control module. The sensing module is configured to obtain environmental information of the vehicle. The planning module needs to make a corresponding decision based on the obtained environmental information, and plan a collision-free drivable track. The control module is configured to control an executor to execute a planning result. In the planning module, the following factors need to be considered from the perspective of safety for the planned drivable track: One is that the planned track meets dynamic and kinematic constraints of the ego-vehicle, and the other is that the planned track does not collide with another obstacle, including a static obstacle and a moving obstacle.

To ensure safety of the planning result, the industry proposes a responsibility-sensitive safety model for self-driving, and converts an idea and a concept of safe driving of drivers into a corresponding mathematical formula, to help divide responsibility of a traffic accident. When the responsibility-sensitive safety model is used, even if another vehicle takes a radical action, it is ensured that an ego-vehicle does not actively cause an accident and avoids the accident as much as possible. The responsibility-sensitive safety model checks whether the planning result is safe. If the responsibility-sensitive safety model checks that the planning result is not safe, the planning module is returned for recalculation. The responsibility-sensitive safety model plans a traveling track based on an assumption that the another vehicle takes the radical action. As a result, a behavior of the ego-vehicle tends to be conservative, and comfort of a user for self-driving experience is not good enough.

SUMMARY

This application provides a vehicle track planning method and apparatus, and a vehicle, so as to improve comfort of self-driving experience while ensuring traveling safety of the vehicle.

According to a first aspect, an embodiment of this application provides a vehicle track planning method, and the method includes: A vehicle track planning apparatus obtains a first predicted track of an obstacle, when the obstacle is a game target, generates a feasible track cluster of the obstacle based on the first predicted track and information about a scenario of interaction between the obstacle and a vehicle, selects a second predicted track from the feasible track cluster, where a cost value of the second predicted track is greater than a preset threshold, generates a spatial-temporal constraint of the vehicle based on the second predicted track; and plans a traveling track of the vehicle based on the spatial-temporal constraint of the vehicle.

According to the method, when the obstacle is the game target, the vehicle track planning apparatus may generate, based on the first predicted track of the obstacle and the information about the scenario of interaction between the obstacle and the vehicle, the feasible track cluster that can safely travel for the obstacle, then generate the spatial-temporal constraint of the vehicle based on the second predicted track whose cost value is greater than the preset threshold and that is selected from the feasible track cluster, and plan the traveling track of the vehicle based on the spatial-temporal constraint, so that the ego-vehicle can be as comfortable as possible on a premise that safe traveling is maintained. This improves comfort of self-driving experience of a first vehicle while traveling safety of the first vehicle is ensured.

In a possible implementation, the generating a feasible track cluster of the obstacle based on the first predicted track and information about a scenario of interaction between the obstacle and a vehicle includes: separately performing horizontal offset sampling and vertical acceleration sampling based on the first predicted track, the information about the interaction scenario, and a sampling limitation constraint, to obtain sampled data; and generating the feasible track cluster of the obstacle based on the sampled data. In this implementation, a series of feasible tracks that the obstacle may travel in the future may be obtained through the horizontal offset sampling and the vertical acceleration sampling.

In a possible implementation, before the selecting a second predicted track from the feasible track cluster, the method further includes: determining, based on the information about the interaction scenario and a mapping relationship set corresponding to the information about the interaction scenario, a cost value of each evaluation dimension corresponding to each candidate predicted track in the feasible track cluster, where the mapping relationship set includes at least one mapping relationship, and each mapping relationship includes a mapping relationship between a preset evaluation dimension and a preset cost value; and determining a cost value of each candidate predicted track based on the cost value of each evaluation dimension corresponding to each candidate predicted track in the feasible track cluster. In this implementation, the candidate predicted track in the feasible track cluster may be evaluated from a plurality of evaluation dimensions, so that the track planning apparatus can determine the cost value of the candidate predicted track.

In a possible implementation, the mapping relationship set corresponding to the information about the interaction scenario meets at least one of the following:

in the interaction scenario, a right of way of the obstacle is higher than a right of way of the vehicle, and a higher right of way of the obstacle indicates a larger cost value of a right of way corresponding to the candidate predicted track;
in the interaction scenario, a passability of the obstacle is higher than a passability of the vehicle, and a higher passability of the obstacle indicates a larger cost value of a passability corresponding to the candidate predicted track;
in the interaction scenario, safety of the obstacle is higher than safety of the vehicle, and higher safety of the obstacle indicates a larger cost value of safety corresponding to the candidate predicted track;
in the interaction scenario, comfort of the obstacle is higher than comfort of the vehicle, and higher comfort of the obstacle indicates a larger cost value of comfort corresponding to the candidate predicted track;
in the interaction scenario, a lower degree of attention of the obstacle on the vehicle indicates a larger cost value of attention corresponding to the candidate predicted track;
a lower changeability of a target type to which the obstacle belongs indicates a larger cost value of a target type corresponding to the candidate predicted track; and
a more dangerous target profile of the obstacle indicates a larger cost value of a target profile corresponding to the candidate predicted track.

In a possible implementation, the generating a spatial-temporal constraint of the vehicle based on the second predicted track includes: generating, in a Frenet coordinate system based on the second predicted track, a first occupation area of the obstacle on an expected traveling path of the vehicle, and generating a horizontal offset constraint and a curvature radius constraint based on the first occupation area; and generating, in an ST coordinate system based on the second predicted track, a second occupation area of the obstacle on the expected traveling path of the vehicle, and generating a speed constraint, an acceleration constraint, and an accelerated acceleration constraint based on the second occupation area. In this implementation, a physical problem can be converted into a mathematical problem, so that the spatial-temporal constraint of the vehicle generated based on the second predicted track is converted into a mathematically solvable problem.

In a possible implementation, after the vehicle track planning apparatus obtains a first predicted track of an obstacle, the method further includes: when the obstacle is a non-game target, generating a spatial-temporal constraint of the vehicle based on the first predicted track; and planning a traveling track of the vehicle based on the spatial-temporal constraint of the vehicle. In this implementation, when the obstacle is the non-game target, and the obstacle does not interact with the vehicle, the spatial-temporal constraint of the vehicle is generated based on the first predicted track of the obstacle, to plan the traveling track of the vehicle, so as to ensure traveling safety of the vehicle.

According to a second aspect, an embodiment of this application further provides a track planning apparatus. The electronic device includes modules/units that perform the method according to any one of the first aspect and the possible designs of the first aspect. These modules/units may be implemented by hardware, or may be implemented by hardware by executing corresponding software.

In a possible implementation, the track planning apparatus includes an obtaining unit and a processing unit.

The obtaining unit is configured to obtain a first predicted track of a target obstacle.

The processing unit is configured to: when the obstacle is a game target, generate a feasible track cluster of the obstacle based on the first predicted track and information about a scenario of interaction between the obstacle and a vehicle; select a second predicted track from the feasible track cluster, where a cost value of the second predicted track is greater than a preset threshold; generate a spatial-temporal constraint of the vehicle based on the second predicted track; and plan a traveling track of the vehicle based on the spatial-temporal constraint of the vehicle.

In a possible implementation, the processing unit is specifically configured to: separately perform horizontal offset sampling and vertical acceleration sampling based on the first predicted track, the information about the interaction scenario, and a sampling limitation constraint, to obtain sampled data; and generate the feasible track cluster of the obstacle based on the sampled data.

In a possible implementation, the processing unit is further configured to: determine, based on the information about the interaction scenario and a mapping relationship set corresponding to the information about the interaction scenario, a cost value of each evaluation dimension corresponding to each candidate predicted track in the feasible track cluster, where the mapping relationship set includes at least one mapping relationship, and each mapping relationship includes a mapping relationship between a preset evaluation dimension and a preset cost value; and determine a cost value of each candidate predicted track based on the cost value of each evaluation dimension corresponding to each candidate predicted track in the feasible track cluster.

In a possible implementation, the mapping relationship set corresponding to the information about the interaction scenario meets at least one of the following: in the interaction scenario, a right of way of the obstacle is higher than a right of way of the vehicle, and a higher right of way of the obstacle indicates a larger cost value of a right of way corresponding to the candidate predicted track; in the interaction scenario, a passability of the obstacle is higher than a passability of the vehicle, and a higher passability of the obstacle indicates a larger cost value of a passability corresponding to the candidate predicted track; in the interaction scenario, safety of the obstacle is higher than safety of the vehicle, and higher safety of the obstacle indicates a larger cost value of safety corresponding to the candidate predicted track; in the interaction scenario, comfort of the obstacle is higher than comfort of the vehicle, and higher comfort of the obstacle indicates a larger cost value of comfort corresponding to the candidate predicted track; in the interaction scenario, a lower degree of attention of the obstacle on the vehicle indicates a larger cost value of attention corresponding to the candidate predicted track; a lower changeability of a target type to which the obstacle belongs indicates a larger cost value of a target type corresponding to the candidate predicted track; and a more dangerous target profile of the obstacle indicates a larger cost value of a target profile corresponding to the candidate predicted track.

In a possible implementation, the processing unit is specifically configured to: generate, in an SL coordinate system based on the second predicted track, a first occupation area of the obstacle on an expected traveling path of the vehicle, and generate a horizontal offset constraint and a curvature radius constraint based on the first occupation area; and generate, in an ST coordinate system based on the second predicted track, a second occupation area of the obstacle on the expected traveling path of the vehicle, and generate a speed constraint, an acceleration constraint, and an accelerated acceleration constraint based on the second occupation area.

In a possible implementation, the processing unit is further configured to: when the obstacle is a non-game target, generate a spatial-temporal constraint of the vehicle based on the first predicted track; and plan a traveling track of the vehicle based on the spatial-temporal constraint of the vehicle.

According to a third aspect, an embodiment of this application further provides a track planning apparatus. The track planning apparatus includes a processor and a memory. The memory is configured to store computer-executable instructions. When the track planning apparatus runs, the processor executes the computer-executable instructions in the memory to perform, by using a hardware resource in the track planning apparatus, the operation steps of the method according to any one of the first aspect or the possible designs of the first aspect.

According to a fourth aspect, an embodiment of this application provides a computer-readable storage medium. The computer-readable storage medium includes computer instructions. When the computer instructions are run on a vehicle-mounted device, the vehicle-mounted device is enabled to perform the technical solution in any one of the first aspect of embodiments of this application or the possible designs of the first aspect.

According to a fifth aspect, an embodiment of this application provides a program product, including instructions. When the program product is run on a vehicle-mounted device, the vehicle-mounted device is enabled to perform the technical solution in any one of the first aspect of embodiments of this application or the possible designs of the first aspect.

According to a sixth aspect, a chip system is provided. The chip system may include a processor. The processor is coupled to a memory, and may be configured to perform the method according to any one of the first aspect and the possible implementations of the first aspect. Optionally, the chip system further includes a memory. The memory is configured to store a computer program (which may also be referred to as code or instructions). The processor is configured to invoke a computer program from the memory and run the computer program, so that a device on which the chip system is installed is enabled to perform the method according to any one of the first aspect or the possible implementations of the first aspect.

In a specific implementation process, the foregoing track planning apparatus may be a chip. An input circuit may be an input pin. An output circuit may be an output pin. A processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

## BRIEF DESCRIPTION OF DRAWINGS

FIG. 1 is a schematic diagram of a vehicle traveling scenario according to an embodiment of this application;
FIG. 2 is a schematic flowchart of a vehicle track planning method according to an embodiment of this application;
FIG. 3 to FIG. 7 are schematic diagrams of types of obstacles in a plurality of scenarios according to an embodiment of this application;
FIG. 8 is a schematic diagram of boundary constraints of horizontal path planning according to an embodiment of this application;

FIG. 9 is a schematic diagram of speed planning based on an ST graph according to an embodiment of this application;

FIG. 10 is a schematic diagram of a candidate predicted track of a game target according to an embodiment of this application;

FIG. 11 is a schematic diagram of horizontal and vertical sampling data of a first predicted track of a game target according to an embodiment of this application;

FIG. 12 is a schematic diagram of a track planning apparatus according to an embodiment of this application; and

FIG. 13 is a schematic diagram of a track planning apparatus according to an embodiment of this application.

## DESCRIPTION OF EMBODIMENTS

The following further describes this application in detail with reference to accompanying drawings. Clearly, the described embodiments are some but not all of embodiments of this application. A specific operation method in a method embodiment may also be applied to an apparatus embodiment. In descriptions of this application, a person of ordinary skill in the art may understand that various reference numerals such as "first" and "second" in this application are merely used for differentiation for ease of description, and are not used to limit the scope of embodiments of this application, or represent a sequence. "A plurality of" means two or more. The term "and/or" describes an association relationship between associated objects and indicates that three relationships may exist. For example, A and/or B may indicate the following cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces).

In embodiments of this application, a vehicle may communicate with another object based on a vehicle-to-everything (for example, vehicle-to-everything (V2X)) wireless communication technology. For example, communication between the vehicle and another object may be implemented based on a vehicle-to-vehicle (for example, vehicle-to-vehicle (V2V)) wireless communication technology. The communication between the vehicle and another object may be performed based on Wi-Fi (wireless fidelity), a fifth generation (5th generation, 5G) mobile communication technology, long term evolution (long term evolution, LTE), or the like.

The industry proposes a classification standard for a self-driving vehicle. A driving automation classification standard proposed by the Society of Automotive Engineers International (Society of Automotive Engineers International, SAE International for short) includes six levels: L0 to L5. From L0 to L2, a driver support system can provide some support functions for a driver. However, regardless of whether driver support functions of the vehicle are enabled, the driver needs to drive the vehicle in person, constantly monitor these driver support functions provided by the driver support system, and turn, brake, or accelerate as required to ensure safety. Differences between support functions of the levels L0 to L2 are as follows: L0 is driving-free automation, and support functions of L0 are limited to providing an alarm and instant assistance. Support functions of L1 are to provide the driver with support in steering or braking/acceleration. The support functions of L2 are to provide the driver with support in steering and braking/acceleration. L3 is semi-self-driving. A self-driving system may complete some driving tasks, and may also monitor a driving environment in some cases. However, the driver needs to be prepared to re-obtain a driving control right at any time. For example, when a function sends a request, the driver needs to perform driving. L4 is highly-self-driving. The self-driving system can complete driving tasks and monitor a driving environment in specific environments and under specific conditions. L5 is fully-self-driving. The self-driving system can complete all driving tasks under all conditions. The solution in embodiments of this application may be applied to a vehicle whose self-driving capability reaches L2 or higher. Details are not described below.

In a vehicle traveling process, any vehicle may restrict track planning of the vehicle by sensing a traveling track of a surrounding vehicle in a preset time period, to improving safety.

In embodiments of this application, a safety factor that needs to be considered by a planning module is converted into optimizing a constraint in the problem, that is, a planned track needs to meet the following:

(1) The planned track needs to meet an executable criterion. To be specific, a planned track of a first vehicle needs to meet a dynamic constraint and a kinematic constraint of the ego-vehicle. The dynamic constraint includes a maximum rotation angle and a maximum rotation speed of a steering wheel, and the kinematic constraint includes a maximum acceleration and a maximum accelerated acceleration in a vertical direction.

(2) The planned track further needs to meet a non-collision criterion. To be specific, the planned track does not collide with another obstacle. Then, a spatial-temporal constraint of the ego-vehicle is generated based on whether the obstacle allocates sufficient attention to the ego-vehicle to interact with the ego-vehicle and a predicted track of the obstacle.

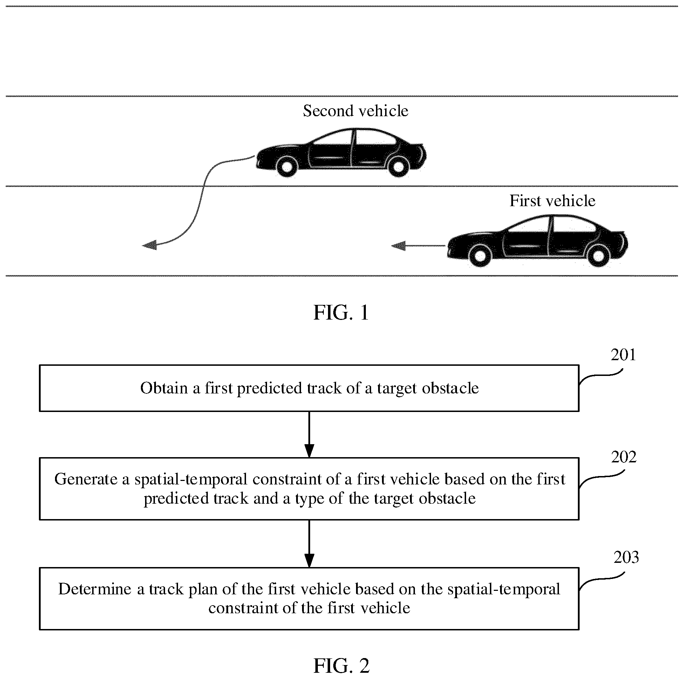

For example, in a schematic diagram of a scenario shown in FIG. 1, the scenario includes a first vehicle and a second vehicle located in a right front of the first vehicle. For example, the first vehicle performs track planning. The first vehicle is a vehicle having a partial or full self-driving capability. For example, the first vehicle may be a vehicle of L2 or higher in the foregoing driving automation classification standard, the second vehicle may be a vehicle, a semi-motor vehicle, a motorcycle, or the like of any level of L0 to L5 in the foregoing driving automation classification standard. The first vehicle may obtain vehicle information of the second vehicle based on a sensor of the ego-vehicle, for example, a camera, a lidar, a millimeter-wave radar, or a global navigation satellite system (Global Navigation Satellite System, GNSS). The vehicle information of the second vehicle may include but is not limited to information such as a geographical position, a traveling speed, a traveling direction, and indicator light information of the second vehicle. The first vehicle may predict a first predicted track of the second vehicle with reference to the vehicle information of the second vehicle and current road information. Then, the first vehicle generates a spatial-temporal constraint of the first vehicle based on the predicted track of the second vehicle and whether the second vehicle allocates sufficient attention to the first vehicle. For example, when the second vehicle shown in FIG. 1 changes a lane towards a left lane in a traveling direction, the second vehicle needs to allocate sufficient attention to the first vehicle to avoid collision with the first vehicle. In this way, there is an interaction process between the first vehicle and the second vehicle, and the first vehicle may generate a feasible track cluster that may ensure the second vehicle based on the interaction information, and then select a second predicted track with a large cost value for the second vehicle from the feasible track cluster. The second predicted track with a large cost value for the second vehicle may also be understood as a track with low comfort for the second vehicle in the feasible track cluster. Then, the first vehicle generates the spatial-temporal constraint of the first vehicle based on the second predicted track, so that the first vehicle plans a track of the first vehicle based on the spatial-temporal constraint. In this way, comfort of self-driving experience of the first vehicle can be improved while traveling safety of the first vehicle is ensured.

Based on the foregoing description, an embodiment of this application provides a vehicle track planning method. The method may be performed by a track planning apparatus in a first vehicle. For ease of description, the following uses an example in which the track planning apparatus in the first vehicle performs the method for description. As shown in FIG. 2, the method includes the following steps.

Step 201: The track planning apparatus of the first vehicle obtains a first predicted track of an obstacle.

The obstacle may include a vehicle, a pedestrian, or another object, and the another object is, for example, a roadblock.

In a possible implementation, an example in which the obstacle is a second vehicle is used. The first vehicle may obtain vehicle information of the second vehicle based on a sensor of the ego-vehicle, such as a camera, a lidar, a millimeter-wave radar, or a GNSS. The vehicle information of the second vehicle may include but is not limited to information such as a geographical position, a traveling speed, a traveling direction, and indicator light information of the second vehicle. The first vehicle may further obtain surrounding traffic indication information, such as traffic light information and traffic sign information. The first vehicle may predict a first predicted track of the second vehicle with reference to information such as the vehicle information of the second vehicle, current road information, and the traffic indication information.

Step 202: The track planning apparatus generates a spatial-temporal constraint of the first vehicle based on the first predicted track and a type of the obstacle.

The type of the obstacle may include two types: an obstacle that allocates sufficient attention to the first vehicle or an obstacle that does not allocate sufficient attention to the first vehicle.

The following describes in detail the type of the obstacle by using an example in which the obstacle is the second vehicle. From a perspective of attention, when there is an interaction process between the second vehicle (another vehicle) and the first vehicle (the ego-vehicle), for example, there is a track crossing or a traveling intention consistency, in a subsequent traveling process of the second vehicle (regardless of whether the second vehicle has a self-driving capability), the second vehicle needs to pay attention (by a driver or a self-driving system) to existence of the first vehicle to avoid collision with the first vehicle. In addition, in this process, a traveling track of the second vehicle is usually affected by a traveling track of the first vehicle. In this case, the second vehicle needs to allocate sufficient attention to the first vehicle. In other words, a type of the second vehicle is the obstacle that allocates sufficient attention to the first vehicle, and the second vehicle is a game target. On the contrary, if there is no interaction process between the second vehicle and the first vehicle, the second vehicle does not need to pay attention to existence of the first vehicle, and the traveling track of the second vehicle is not affected by the traveling track of the first vehicle. In other words, the second vehicle does not need to allocate sufficient attention to the first vehicle. In this case, the type of the second vehicle is the obstacle that does not allocate sufficient attention to the first vehicle, and the second vehicle is a non-game target.

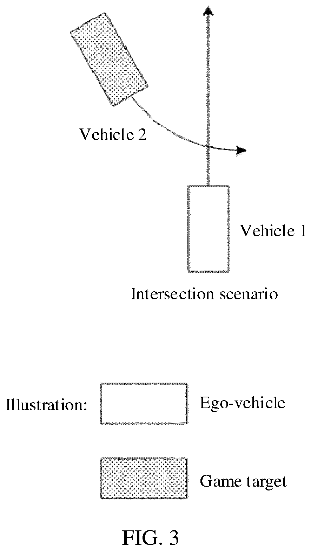

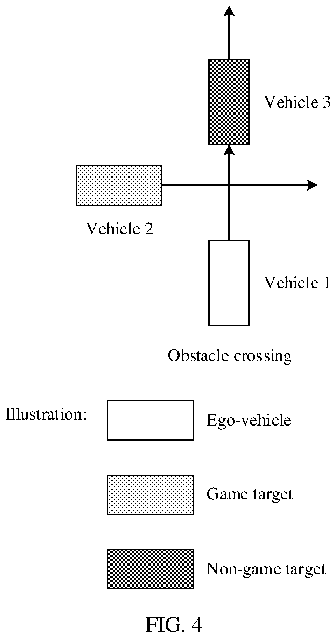

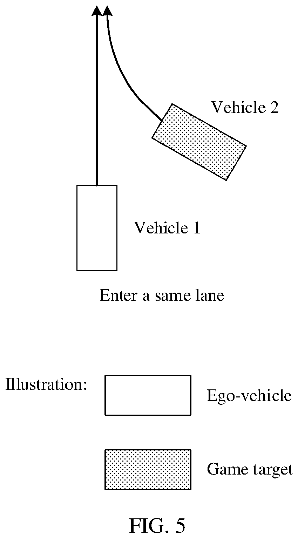

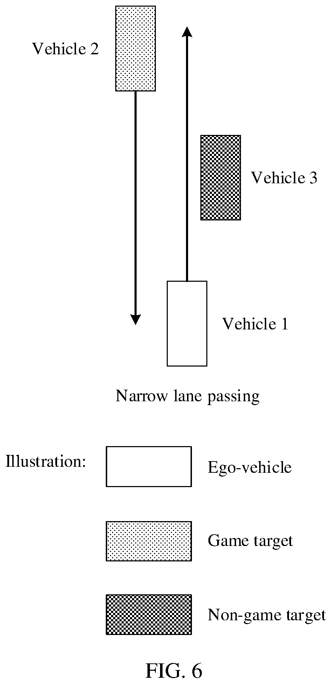

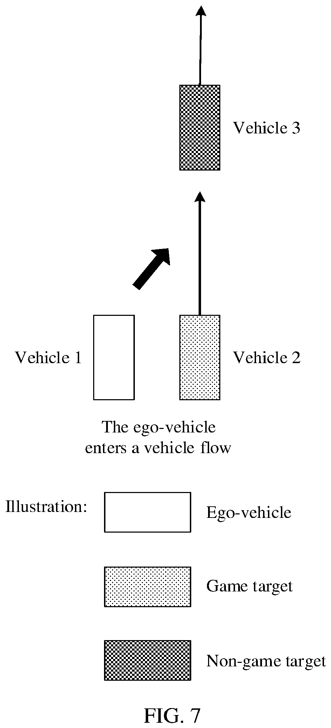

With reference to FIG. 3 to FIG. 7, a game target and a non-game target are described. In FIG. 3 to FIG. 7, a vehicle 1 is a first vehicle (that is, an ego-vehicle). Obstacles such as a vehicle 2 that is shown in FIG. 3 and that turns left at an intersection, a vehicle 2 that is shown in FIG. 4 and that crosses an intersection, a vehicle 2 that is shown in FIG. 5 and that enters a same lane with the vehicle 1, an oncoming vehicle 2 shown in FIG. 6 during narrow lane passing, and a vehicle 2 that is shown in FIG. 7 and that is behind the vehicle 1 and enters a vehicle flow have a track conflict or an intention conflict with the first vehicle. Behaviors of these obstacles change due to a driving behavior of the first vehicle. Therefore, these obstacles need to allocate sufficient attention to existence of the first vehicle to avoid collision with the first vehicle, and are all game targets. Behaviors of obstacles, such as a vehicle 3 that is shown in FIG. 4 and that travels in front of the vehicle 1 in a lane in which the vehicle 1 is located, a static vehicle (namely, a vehicle 3) that is shown in FIG. 6 and that is on a roadside, and a vehicle 3 that is shown in FIG. 7 and that is in front of the vehicle 1 and enters a vehicle flow, do not change due to the behavior of the first vehicle. These obstacles do not need to allocate sufficient attention to the first vehicle, and are all non-game targets.

Based on the foregoing content, the foregoing step 202 has a plurality of possible implementations. The following provides specific descriptions by using the following possible implementation a1 and possible implementation a2.

In the possible implementation a1, in step 202, if the type of the obstacle is the non-game target, that is, sufficient attention does not need to be allocated to the obstacle of the first vehicle, the track planning apparatus generates the spatial-temporal constraint of the first vehicle based on the first predicted track.

In a possible implementation, the track planning apparatus generates, in a Frenet coordinate system based on the first predicted track, a first occupation area of the obstacle on an expected traveling path of the vehicle, and generates a horizontal offset constraint and a curvature radius constraint based on the first occupation area, namely, a spatial constraint in the spatial-temporal constraint. Then, the track planning apparatus generates, in an ST coordinate system based on the first predicted track, a second occupation area of the obstacle on the expected traveling path of the first vehicle, and generates a speed constraint, an acceleration constraint, and an accelerated acceleration constraint based on the second occupation area, namely, a temporal constraint in the spatial-temporal constraint.

The following describes a spatial constraint used for horizontal path planning.

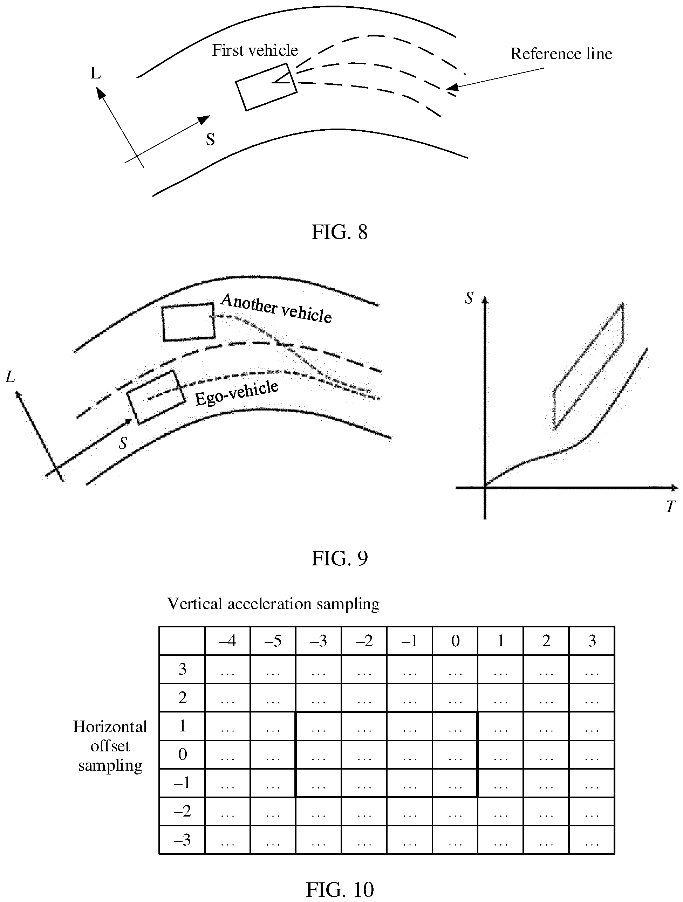

Horizontal path planning based on the Frenet coordinate system is used as an example. As shown in FIG. 8, in the Frenet coordinate system, a road center line is used as a reference line, a direction of the first vehicle along the reference line is referred to as a vertical direction, namely, an S coordinate, a normal direction of the reference line is an L coordinate, a distance between a projected point of a position of the first vehicle on the reference line and a position of the first vehicle is a horizontal offset displacement, and a curve distance between a start point of the first vehicle and the projection point is vertical displacement. Because the first vehicle continuously travels along the reference line, the horizontal displacement L of the vehicle constantly changes with the vertical displacement S.

In this embodiment of this application, the horizontal path planning may be performed by using the following boundary constraint.

$$l_{low} \leq l(s) \leq l_{up}$$

$$k_{low} \leq k(s) \leq k_{up}$$

$l(s)$ is a horizontal offset constraint of a path, and a maximum horizontal offset that can travel along an S-axis may be obtained through calculation based on a maximum steering wheel angle and a maximum steering wheel rotation speed that correspond to the ego-vehicle at different vehicle speeds and a boundary of the road. After the maximum rotation angle and the maximum rotation speed of the steering wheel correspond to a maximum rotation speed of a front wheel, Table 1 shows an example of a correspondence between the vehicle speed and a maximum front wheel rotation angle and a maximum front wheel rotation speed.

**Table 1**

| Vehicle speed (km/h) | 20 | 30 | 40 | 50 | 100 |
|---|---|---|---|---|---|
| Maximum front wheel angle rad | 0.56 | 0.15 | 0.096 | 0.074 | 0.022 |
| Maximum front wheel speed rad/s | 0.285 | 0.233 | 0.116 | 0.07 | 0.06 |

For example, it is assumed that the first vehicle travels on a lane A, a center line of the lane A is a reference line, and a point on the reference line is used as an original point. A distance from the original point to a first lane solid line on a left side of the reference line or a road boundary or an obstacle that is not crossed may be set to $l_{low}$, and a distance from the original point to the first lane solid line on a right side of the reference line or an obstacle that is not crossed may be set to $l_{up}$. For example, if lane lines on both sides of the lane A are solid lines, and a road width of the lane A is d, is, $l_{low}$ is $-\dfrac{d}{2}$ , and $l_{up}$ is $\dfrac{d}{2}$ .

$k(s)$ is a curvature radius constraint of the path, to ensure that a curvature of each point on the path meets a minimum turning radius limitation of the vehicle. $k(s)$ is related to physical parameters (such as a turning limit and a vehicle type), a motion status, and friction of a road surface.

The following describes a temporal constraint used for vertical path planning.

In an example of speed planning based on an ST graph, a horizontal axis T is a time axis, and a vertical axis S is a direction along an expected traveling path (namely, a reference line) of the first vehicle. As shown in FIG. 9, a parallel quadrilateral area in the ST graph is an occupation area that is on the expected traveling path of the first vehicle (the ego-vehicle) and that is generated based on a predicted track of an obstacle (another vehicle), and a curve is a speed planning curve of the first vehicle.

When speed planning is performed based on the ST graph, the following boundary constraints are used to ensure that a speed planning result is executable.

$$v_{min} \ \leq \ v(t) \ \leq \ v_{max}$$

$$a_{min} \ \leq \ a(t) \ \leq \ a_{max}$$

$$jerk_{min} \ \leq \ jerk(t) \ \leq \ jerk_{max}$$

$v(t)$, $a(t)$, and $jerk(t)$ are respectively upper and lower bound constraints of a speed, an acceleration, and an accelerated acceleration allowed by the first vehicle. v(t) is related to various factors such as a current road speed limit (for example, a maximum speed limited by a highway is 120 km/h), and an environmental risk speed limit (for example, a speed limit at a school gate is 30 km/h, and a maximum speed limited by a highway is 60 km/h when visibility is within 200 m in fog weather). When the first vehicle moves forward, v(t) is a positive value, and when the first vehicle is reversed, $v(t)$ is a negative value. In an example, the first vehicle travels on an urban road, $v_{min}$ is 0, and $v_{max}$ is a maximum speed limit of the urban road. In another example, when the first vehicle normally travels on a highway with a maximum speed limit of 120 km/h and a minimum speed limit of 60 km/h, the highway $v_{min}$ may be 60 km/h, and $v_{max}$ may be 120 km/h.

$a(t)$ is an acceleration, $a(t)$ is a positive value when the vehicle accelerates, and $a(t)$ is a negative value when the vehicle decelerates. For example, $a_{min}$ may be -4 m/s$^2$, and $a_{max}$ may be 3 m/s$^2$.

$jerk(t)$ is a derivative of acceleration to time, and represents a change rate of the acceleration. A value of $jerk(t)$ is related to the current speed and the acceleration. A value of $jerk(t)$ may be a positive number, and represents that a larger value indicates a larger acceleration; or a value of $jerk(t)$ may be a negative number, and represents that a larger value indicates a smaller acceleration. For example, $jerk_{min}$ may be -10 m/s$^3$, and $jerk_{max}$ may be 1.5 m/s$^3$.

According to the foregoing embodiment, the speed of the first vehicle is limited between $v_{min}$ and $v_{max}$, so that the vehicle speed is neither too low nor too high. The acceleration of the first vehicle is limited between $a_{min}$ and $a_{max}$, so that the acceleration does not exceed a maximum acceleration capability of the first vehicle. The accelerated acceleration of the first vehicle is limited between $jerk_{min}$ and $jerk_{max}$, so that the acceleration of the first vehicle does not change violently. Therefore, the traveling track of the first vehicle is planned based on the spatial-temporal constraint of the first vehicle. This can ensure traveling safety of the vehicle, and improve comfort of self-driving experience.

By using the foregoing spatial-temporal constraint, the planned traveling track of the first vehicle may meet the foregoing executable criterion.

In a possible implementation a2, in the foregoing step 202, if the type of the obstacle is the game target, the obstacle needs to allocate sufficient attention to the first vehicle, to avoid collision with the first vehicle. The track planning apparatus may generate a series of candidate predicted tracks, also be referred to as a feasible track cluster, for the obstacle to travel in the future based on the first predicted track of the obstacle (the first predicted track may be understood as a track with a maximum future travel probability of the obstacle) and information about a scenario of interaction between the obstacle and the first vehicle. Then, a track that has a large cost value for the obstacle is selected from the feasible track cluster as a second predicted track, and the second predicted track may be understood as a track that has low comfort for the obstacle in the feasible track cluster. Then, an occupation area of the obstacle is generated based on the second predicted track, the spatial-temporal constraint of the first vehicle is determined based on the occupation area of the obstacle, and the traveling track of the first vehicle is planned based on the spatial-temporal constraint of the first vehicle. In this way, the planned traveling track of the first vehicle enables the first vehicle to be as comfortable as possible on a premise that safe traveling is maintained.

The following describes in detail how to determine the second predicted track.

In a possible implementation, the track planning apparatus may perform horizontal offset sampling and vertical acceleration sampling based on the first predicted track, so as to generate a series of candidate predicted tracks that the obstacle may travel in the future, namely, the feasible track cluster. To obtain a series of candidate predicted tracks that the obstacle may travel in the future, a sampling limitation constraint may be set. The sampling limitation constraint may include a sampling limitation constraint corresponding to the horizontal offset sampling and a sampling limitation constraint corresponding to the vertical acceleration sampling. The sampling limitation constraint corresponding to the horizontal offset sampling includes but is not limited to information such as a road boundary, a vehicle speed, and whether the scenario is an intersection scenario. The sampling limitation constraint corresponding to the vertical acceleration sampling includes but is not limited to information such as an accelerated acceleration constraint, an acceleration constraint, a speed constraint, and different target types.

Then, the track planning apparatus may separately perform the horizontal offset sampling and the vertical acceleration sampling based on the first predicted track, information about a scenario of interaction between the obstacle and the vehicle, and the sampling limitation constraint, to obtain sampled data, generate, based on the sampled data, at least one candidate predicted track on which the obstacle may travel in the future, and determine, from the at least one candidate predicted track on which the obstacle may travel in the future, a candidate predicted track that has a large cost value for the obstacle as a second predicted track of the obstacle.

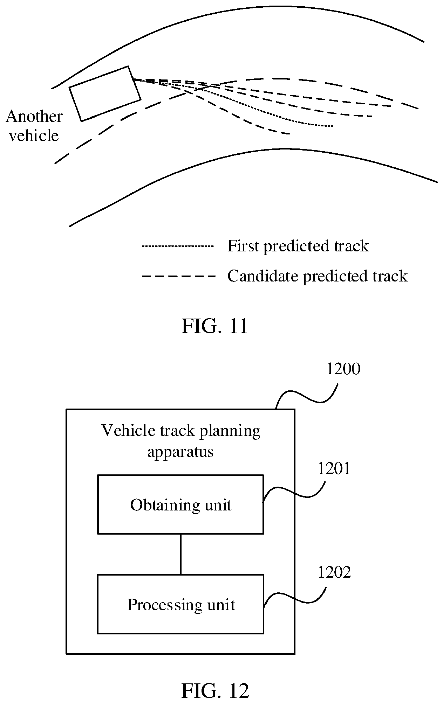

As shown in FIG. 10, the horizontal offset sampling and the vertical acceleration sampling are separately performed based on the first predicted track of another vehicle to obtain the sampled data shown in FIG. 11. In the table in FIG. 11, a first row indicates that a series of accelerations used for the vertical acceleration sampling are separately accelerations, and a first column indicates that horizontal offset distances used for the horizontal offset sampling are separately -3 to 3 m. An ellipsis in each grid represents coordinates of a plurality of track points and speed information of another vehicle that are obtained by sampling by using an acceleration and a horizontal offset distance. For example, the vertical acceleration sampling is performed by using an acceleration of -4 m/s$^2$, and the horizontal offset sampling is performed by using a horizontal offset distance of 3 m, to obtain coordinates of a plurality of track points of another vehicle and speed information of another vehicle at each track point, and the coordinates and the speed information is stored in a grid in a second row and a second column. Then, a series of feasible track clusters, that is, at least one candidate predicted track on which another vehicle may travel in the future, are generated based on data that is in the sampled data and whose horizontal offset meets a range of -1 to 1 m and whose vertical acceleration meets a range of -3 to 0 m/s$^2$. For example, three candidate predicted tracks are planned in FIG. 11.

After the at least one candidate predicted track on which the obstacle may travel in the future is obtained, the determining, from the at least one candidate predicted track on which the obstacle may travel in the future, a candidate predicted track having a large cost value for the obstacle may be implemented in the following manner: The track planning apparatus may evaluate each candidate predicted track from a plurality of evaluation dimensions, to obtain a cost value of each candidate predicted track, and then determine, from at least one candidate predicted track that may be traveled in the future, a candidate predicted track whose cost value of an obstacle is greater than a cost threshold as the second predicted track, so that the first vehicle generates the spatial-temporal constraint of the first vehicle based on the second predicted track.

The following describes how to determine the cost value of each candidate predicted track.

In this embodiment of this application, the track planning apparatus may further store a mapping relationship set, or the track planning apparatus obtains a mapping relationship set from another storage device of the first vehicle. The mapping relationship set includes at least one mapping relationship, and each mapping relationship includes a mapping relationship between a preset evaluation dimension and a preset cost value. For example, it is assumed that there are seven preset evaluation dimensions: a right of way, a passability, safety, comfort, attention, a target type, and a target profile. In this case, the mapping relationship set includes seven mapping relationships. Each evaluation dimension is described below, and details are not described herein again.

The mapping relationship set in this embodiment of this application may include at least one of the following mapping relationships:

a mapping relationship between the right of way and the preset cost value;
a mapping relationship between the passability and the preset cost value;
a mapping relationship between the safety and the preset cost value;
a mapping relationship between the comfort and the preset cost value;
a mapping relationship between the attention and the preset cost value;
a mapping relationship between the target type and the preset cost value; and
a mapping relationship between the target profile and the preset cost value.

In this embodiment of this application, information about each interaction scenario may correspond to one mapping relationship set. The track planning apparatus may determine, based on information about a scenario of interaction between the obstacle and the first vehicle and a mapping relationship set corresponding to the information about the interaction scenario, the cost value of each evaluation dimension corresponding to each candidate predicted track in the at least one candidate predicted track. Then, for each candidate predicted track, a cost value of the candidate predicted track may be determined based on the cost value of each evaluation dimension corresponding to the candidate predicted track.

For example, the mapping relationship set corresponding to the information about the scenario of interaction between the first vehicle and the obstacle includes the foregoing seven mapping relationships. The track planning apparatus evaluates each candidate predicted track based on the information about the interaction scenario in dimensions such as the right of way, the passability, the safety, the comfort, the attention, the target type, and the target profile. Different weights are set for different dimensions. For each candidate predicted track, weighted summation is performed on cost values corresponding to evaluation dimensions, to obtain the cost value of each candidate predicted track.

The cost value of each candidate predicted track may be calculated by using the following formula:

$$trajectory \,_{cost} = \sum w_i * x_i \quad \text{Formula (1)}$$

In the formula (1), $x_i$ is a cost value of different evaluation dimensions, and the value ranges from 0 to 1. $w_i$ is a weight value of a corresponding dimension. A weight value of an evaluation dimension is a relative importance degree of the evaluation dimension in overall evaluation, and may be any value. For example, a value of $w_i$ ranges from 0 to 1. A specific value of $w_i$ is not limited herein. For example, a weight of the comfort is 0.3 to 0.4. $trajectory \,_{cost}$ is a final cost value of each candidate predicted track.

Then, the track planning apparatus determines the second predicted track from candidate predicted tracks whose cost values are greater than the cost value threshold in the at least one candidate predicted track. For example, a candidate predicted track with a maximum cost value is determined from the candidate predicted tracks whose cost values are greater than the cost threshold as the second predicted track, and the candidate predicted track with the maximum cost value may be understood as a candidate predicted track that is of the at least one candidate predicted track and that has lowest comfort for the obstacle. For another example, N candidate predicted tracks with large cost values are determined from the candidate predicted tracks whose cost values are greater than the cost threshold, where N is an integer greater than 1, and then one candidate predicted track is selected from the N candidate predicted tracks as the second predicted track.

The following describes different evaluation dimensions.

(1) Right of way: A right of an object to travel in specific space and time. The following table lists right of way levels in different scenarios.

Intersection scenario rule: zebra crossing > straight > turn left > turn right > U turn (U turn).

Non-intersection scenario rule: zebra crossing > straight lane > lane change > reverse straight > crossing > free entrance.

For example, in the intersection scenario, if the obstacle is on the zebra crossing, and the first vehicle goes straight, a right of way of the obstacle is high; or if the first vehicle goes straight, and the obstacle turns left, a right of way of the first vehicle is high.

In a scenario of interaction between the obstacle and the first vehicle, when the right of way of the obstacle is higher than the right of way of the first vehicle, and the right of way of the obstacle is higher, the obstacle is more likely to maintain a current state. In other words, a larger deviation between a sampled candidate predicted track and an initial first predicted track indicates a larger cost value of the right of way corresponding to the candidate predicted track.

(2) Passability: The first vehicle needs to maintain a specific speed to pass through a specific space. For example, when the first vehicle passes through an intersection, a faster speed indicates a higher passability. However, if the first vehicle brakes in the middle, the first vehicle passes through the intersection slowly, and the passability is low. Examples of the passability in different scenarios are as follows:

Intersection scenario rule: straight > turn left > turn right > U turn (U turn) > zebra crossing.

Non-intersection scenario rule: straight lane > lane change > reverse straight > crossing > free entrance.

For example, in an intersection scenario, if the obstacle is on the zebra crossing, and the first vehicle goes straight, the first vehicle has a high passability. The higher the passability of the obstacle is, the more likely the obstacle is to maintain a current state. In the interaction scenario, the passability of the obstacle is higher than that of the first vehicle, and higher passability of the obstacle indicates a higher cost value of the passability corresponding to the candidate predicted track.

(3) Safety: indicating safety of an interaction process between the first vehicle and the obstacle. For example, a distance greater than a specific threshold is always maintained in the interaction process between the first vehicle and the obstacle. In this case, safety is high. For another example, a collision occurs in the interaction process between the first vehicle and the obstacle. In this case, safety is the lowest. The higher the safety of the obstacle is, the more likely the obstacle is to maintain the current state. Examples of safety levels in different scenarios are as follows:

Intersection scenario rule: zebra crossing > straight > turn left > turn right > U turn (U turn).

Non-intersection scenario rule: crossing > straight lane > lane change > reverse straight > free entrance.

In the interaction scenario, safety of the obstacle is higher than safety of the first vehicle, and higher safety of the obstacle indicates a higher cost value of the safety corresponding to the candidate predicted track.

(4) Comfort: The comfort may be represented by a jerk value. A larger jerk indicates poorer comfort. The higher the comfort of the obstacle is, the more likely the obstacle is to maintain the current state. In different scenarios, comfort can be further classified into horizontal and vertical comfort. The following is an example of comfort in different scenarios:

Intersection scenario rule:

Horizontal: U turn (U turn) > turn left ≈ turn right > zebra crossing > straight.

Vertical: zebra crossing > straight > turn left ≈ turn right > U turn (U turn).

Non-intersection scenario rule:

Horizontal: lane change > free entrance > reverse straight > straight lane ≈ crossing.

Vertical: straight lane > lane change > reverse straight > crossing > free entrance.

In the interaction scenario, comfort of the obstacle is higher than comfort of the first vehicle, and higher comfort of the obstacle indicates a larger cost value of comfort corresponding to the candidate predicted track.

(5) Attention: A track is evaluated based on a degree of attention of the obstacle on the first vehicle. The lower degree of attention of the obstacle on the first vehicle is, the more likely the obstacle is to maintain the current state. In the interaction scenario, a lower degree of attention of the obstacle on the first vehicle indicates a large cost value of attention corresponding to the candidate predicted track.

(6) Obstacle type: The track is evaluated based on a changeability of the obstacle type. The lower the changeability of the obstacle type is, the more likely the obstacle is to maintain the current state. The following table lists a comparison rule of cost values of different target types.

Children > pedestrian > non-motor vehicle ≈ motor cycle > large vehicle > small vehicle.

The changeability may be understood as being capable of changing a current motion state. For example, a child is incapable of changing a current motion state, and the child has a low changeability and a corresponding cost value is large. A small vehicle has a high changeability and a corresponding cost value is small. A lower changeability of a target type to which the obstacle belongs indicates a larger value of the target type corresponding to the candidate predicted track.

(7) Obstacle profile: A track is evaluated based on the obstacle profile. The more dangerous the obstacle profile is, the more likely the obstacle is to maintain the current state. The following is an example of the rule:

Danger > radical > normal > conservative.

For example, the obstacle profile may be determined based on status management of the obstacle in a life cycle. For example, if the obstacle is an intelligent vehicle, the obstacle profile may be determined based on a behavior of the intelligent vehicle. For example, the intelligent vehicle needs to turn left. If the intelligent vehicle forcibly turns left on a straight lane and is inserted into a left-turn lane, the obstacle profile may be considered as dangerous. In some other examples, the profile may alternatively be determined based on a behavior of the intelligent vehicle, a type of the intelligent vehicle, a type of a driver, and what the driver is currently doing. The type of the smart vehicle may be, for example, a sports car or a home car. A more dangerous target profile of the obstacle indicates a larger cost value of a target profile corresponding to the candidate predicted track.

In the foregoing embodiment, after the second predicted track of the obstacle is determined, the track planning apparatus generates the spatial-temporal constraint of the first vehicle based on the second predicted track, to convert a physical problem into a mathematical problem. In a possible implementation, the first occupation area of the obstacle on the expected traveling path of the first vehicle is generated in the Frenet coordinate system based on the second predicted track, and the horizontal offset constraint and the curvature radius constraint, namely, the spatial constraint in the spatial-temporal constraint, are generated based on the first occupation area. Then, the track planning apparatus generates, in the ST coordinate system based on the second predicted track, the second occupation area of the obstacle on the expected traveling path of the first vehicle, and generates the speed constraint, the acceleration constraint, and the accelerated acceleration constraint based on the second occupation area, namely, the temporal constraint in the spatial-temporal constraint. Herein, for a specific implementation of generating the spatial-temporal constraint of the first vehicle based on the second predicted track, refer to related content of generating the spatial-temporal constraint of the first vehicle based on the first predicted track in the foregoing possible implementation a1. Details are not described herein again.

Step 203: Determine a track plan of the first vehicle based on the spatial-temporal constraint of the first vehicle.

When the obstacle is the non-game target, after generating the spatial-temporal constraint of the first vehicle based on the first predicted track, the track planning apparatus may plan the traveling track of the first vehicle based on the spatial-temporal constraint of the first vehicle that is generated based on the first predicted track.

When the obstacle is the game target, after generating the spatial-temporal constraint of the first vehicle based on the second predicted track, the track planning apparatus may plan the traveling track of the first vehicle based on the spatial-temporal constraint of the first vehicle that is generated based on the second predicted track.

According to the foregoing content, the obstacle is classified into the non-game target and the game target based on whether the obstacle allocates sufficient attention to the ego-vehicle (that is, the first vehicle) and whether the obstacle interacts with the ego-vehicle. For the non-game target, the obstacle does not interact with the ego-vehicle, and the spatial-temporal constraint of the ego-vehicle is generated based on the first predicted track of the obstacle. For the game target, the obstacle interacts with the ego-vehicle, and the feasible track cluster (namely, at least one candidate predicted track) of the obstacle is generated based on the interaction scenario, then, the spatial-temporal constraint of the ego-vehicle is generated based on a feasible track (namely, the foregoing second predicted track) that is selected from the feasible track cluster and that has a large value for the obstacle. In this case, the planned track of the ego-vehicle can be as comfortable as possible on a premise that safe traveling is maintained.

Based on the foregoing embodiment and a same concept, FIG. 12 is a schematic diagram of a track planning apparatus according to an embodiment of this application. As shown in FIG. 12, the track planning apparatus 1200 may implement steps performed by the track planning apparatus in the foregoing method embodiments. The track planning apparatus may include an obtaining unit 1201 and a processing unit 1202.

The obtaining unit 1201 is configured to obtain a first predicted track of an obstacle.

The processing unit 1202 is configured to: when the obstacle is a game target, generate a feasible track cluster of the obstacle based on the first predicted track and information about a scenario of interaction between the obstacle and a vehicle; select a second predicted track from the feasible track cluster, where a cost value of the second predicted track is greater than a preset threshold; and generate a spatial-temporal constraint of the vehicle based on the second predicted track, where the spatial-temporal constraint of the vehicle is used by the vehicle to plan a traveling track of the ego-vehicle.

In a possible implementation, the processing unit 1202 is specifically configured to: separately perform horizontal offset sampling and vertical acceleration sampling based on the first predicted track, the information about the interaction scenario, and a sampling limitation constraint, to obtain sampled data; and generate the feasible track cluster of the obstacle based on the sampled data.

In a possible implementation, the processing unit 1202 is further configured to:

determine, based on the information about the interaction scenario and a mapping relationship set corresponding to the information about the interaction scenario, a cost value of each evaluation dimension corresponding to each candidate predicted track in the feasible track cluster, where the mapping relationship set includes at least one mapping relationship, and each mapping relationship includes a mapping relationship between a preset evaluation dimension and a preset cost value;
and determine a cost value of each candidate predicted track based on the cost value of each evaluation dimension corresponding to each candidate predicted track in the feasible track cluster.

In a possible implementation, the mapping relationship set corresponding to the information about the interaction scenario meets at least one of the following:

in the interaction scenario, a right of way of the obstacle is higher than a right of way of the vehicle, and a higher right of way of the obstacle indicates a larger cost value of a right of way corresponding to the candidate predicted track;
in the interaction scenario, a passability of the obstacle is higher than a passability of the vehicle, and a higher passability of the obstacle indicates a larger cost value of a passability corresponding to the candidate predicted track;
in the interaction scenario, safety of the obstacle is higher than safety of the vehicle, and higher safety of the obstacle indicates a larger cost value of safety corresponding to the candidate predicted track;
in the interaction scenario, comfort of the obstacle is higher than comfort of the vehicle, and higher comfort of the obstacle indicates a larger cost value of comfort corresponding to the candidate predicted track;
in the interaction scenario, a lower degree of attention of the obstacle on the vehicle indicates a larger cost value of attention corresponding to the candidate predicted track;
a lower changeability of a target type to which the obstacle belongs indicates a larger cost value of a target type corresponding to the candidate predicted track; and
a more dangerous target profile of the obstacle indicates a larger cost value of a target profile corresponding to the candidate predicted track.

In a possible implementation, the processing unit 1202 is specifically configured to: generate, in an SL coordinate system based on the second predicted track, a first occupation area of the obstacle on an expected traveling path of the vehicle, and generate a horizontal offset constraint and a curvature radius constraint based on the first occupation area; and generate, in an ST coordinate system based on the second predicted track, a second occupation area of the obstacle on the expected traveling path of the vehicle, and generate a speed constraint, an acceleration constraint, and an accelerated acceleration constraint based on the second occupation area.

In a possible implementation, the processing unit 1202 is further configured to: when the obstacle is a non-game target, generate a spatial-temporal constraint of the vehicle based on the first predicted track, where the spatial-temporal constraint of the vehicle is used by the vehicle to plan a traveling track of the ego-vehicle.

For concepts, explanations, detailed descriptions, and other steps of the communication apparatus that are related to the technical solutions provided in embodiments of this application, refer to the descriptions of the content in the foregoing method or other embodiments. Details are not described herein again.

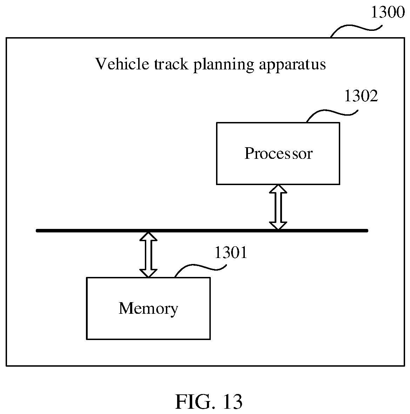

According to the foregoing method, FIG. 13 is a schematic diagram of a structure of a track planning apparatus according to an embodiment of this application. As shown in FIG. 13, a track planning apparatus 1300 may include a memory 1301 and a processor 1302, and may further include a bus system. The processor 1302 and the memory 1301 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, each step of the foregoing method may be completed by using an integrated logic circuit of hardware in the processor 1302 or an instruction in a form of software. The steps of the method disclosed with reference to embodiments of this application may be directly performed by a hardware processor, or may be performed by using a combination of hardware in the processor 1302 and a software module. The software module may be located in a mature storage medium in the art, for example, a random access memory, a flash memory, a read-only memory, a programmable read-only memory, an electrically erasable programmable memory, or a register. The storage medium is located in the memory 1301, and the processor 1302 reads information in the memory 1301 and completes the steps in the foregoing methods in combination with hardware of the processor.

It should be noted that, the processor 1302 in this embodiment of this application may be an integrated circuit chip, and has a signal processing capability. In an implementation process, the steps in the foregoing method embodiments can be implemented by a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 1301 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the system and methods described in this specification includes but is not limited to these memories and any memory of another proper type.

This application further provides a vehicle, and the vehicle may include the foregoing track planning apparatus.

In an example, the vehicle may be the first vehicle in this application.

According to the methods provided in embodiments of this application, this application further provides a computer program product. The computer program product includes computer program code or instructions. When the computer program code or the instructions is/are run on a computer, the computer is enabled to perform the method according to any one of the foregoing method embodiments.

According to the method provided in embodiments of this application, this application further provides a computer-readable storage medium. The computer-readable medium stores program code. When the program code is run on a computer, the computer is enabled to perform the method in any one of the foregoing method embodiments.

According to the method provided in embodiments of this application, this application further provides a chip system. The chip system may include a processor. The processor is coupled to the memory, and may be configured to perform the method in any one of the foregoing method embodiments. Optionally, the chip system further includes a memory. The memory is configured to store a computer program (which may also be referred to as code or instructions). The processor is configured to invoke the computer program from the memory and run the computer program, so that a device on which the chip system is installed performs the method in any one of the foregoing method embodiments.

All or some of the foregoing embodiments may be implemented by using software, hardware, firmware, or any other combination thereof. When software is used to implement embodiments, the foregoing embodiments may be implemented completely or partially in a form of a computer program product. The compute program product includes one or more computer instructions. When the computer program instructions are loaded or executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. A vehicle track planning method, wherein the method comprises:

   obtaining a first predicted track of an obstacle;
   when the obstacle is a game target, generating a feasible track cluster of the obstacle based on the first predicted track and information about a scenario of interaction between the obstacle and a vehicle;
   selecting a second predicted track from the feasible track cluster, wherein a cost value of the second predicted track is greater than a preset threshold;

generating a spatial-temporal constraint of the vehicle based on the second predicted track; and
planning a traveling track of the vehicle based on the spatial-temporal constraint of the vehicle.

2. The method according to claim 1, wherein the generating a feasible track cluster of the obstacle based on the first predicted track and information about a scenario of interaction between the obstacle and a vehicle comprises:

separately performing horizontal offset sampling and vertical acceleration sampling based on the first predicted track, the information about the interaction scenario, and a sampling limitation constraint, to obtain sampled data; and
generating the feasible track cluster of the obstacle based on the sampled data.

3. The method according to claim 2, wherein before the selecting a second predicted track from the feasible track cluster, the method further comprises:

determining, based on the information about the interaction scenario and a mapping relationship set corresponding to the information about the interaction scenario, a cost value of each evaluation dimension corresponding to each candidate predicted track in the feasible track cluster, wherein the mapping relationship set comprises at least one mapping relationship, and each mapping relationship comprises a mapping relationship between a preset evaluation dimension and a preset cost value; and
determining a cost value of each candidate predicted track based on the cost value of each evaluation dimension corresponding to each candidate predicted track in the feasible track cluster.

4. The method according to claim 3, wherein the mapping relationship set corresponding to the information about the interaction scenario meets at least one of the following:

in the interaction scenario, a right of way of the obstacle is higher than a right of way of the vehicle, and a higher right of way of the obstacle indicates a larger cost value of a right of way corresponding to the candidate predicted track;
in the interaction scenario, a passability of the obstacle is higher than a passability of the vehicle, and a higher passability of the obstacle indicates a larger cost value of a passability corresponding to the candidate predicted track;
in the interaction scenario, safety of the obstacle is higher than safety of the vehicle, and higher safety of the obstacle indicates a larger cost value of safety corresponding to the candidate predicted track;
in the interaction scenario, comfort of the obstacle is higher than comfort of the vehicle, and higher comfort of the obstacle indicates a larger cost value of comfort corresponding to the candidate predicted track;
in the interaction scenario, a lower degree of attention of the obstacle on the vehicle indicates a larger cost value of attention corresponding to the candidate predicted track;
a lower changeability of a target type to which the obstacle belongs indicates a larger cost value of a target type corresponding to the candidate predicted track; and
a more dangerous target profile of the obstacle indicates a larger cost value of a target profile corresponding to the candidate predicted track.

5. The method according to any one of claims 2 to 4, wherein the generating a spatial-temporal constraint of the vehicle based on the second predicted track comprises:

generating, in a Frenet coordinate system based on the second predicted track, a first occupation area of the obstacle on an expected traveling path of the vehicle, and generating a horizontal offset constraint and a curvature radius constraint based on the first occupation area; and
generating, in an ST coordinate system based on the second predicted track, a second occupation area of the obstacle on the expected traveling path of the vehicle, and generating a speed constraint, an acceleration constraint, and an accelerated acceleration constraint based on the second occupation area.

6. The method according to claim 1, wherein after the obtaining a first predicted track of an obstacle, the method further comprises: when the obstacle is a non-game target, generating a spatial-temporal constraint of the vehicle based on the first predicted track; and planning a traveling track of the vehicle based on the spatial-temporal constraint of the vehicle.

7. A track planning apparatus, comprising:

an obtaining unit, configured to obtain a first predicted track of a target obstacle; and
a processing unit, configured to: when the obstacle is a game target, generate a feasible track cluster of the obstacle based on the first predicted track and information about a scenario of interaction between the obstacle and a vehicle; select a second predicted track from the feasible track cluster, wherein a cost value of the second predicted track is greater than a preset threshold; generate a spatial-temporal constraint of the vehicle based on the second predicted track; and plan a traveling track of the vehicle based on the spatial-temporal constraint of the vehicle.

8. The apparatus according to claim 7, wherein the processing unit is specifically configured to:

separately perform horizontal offset sampling and vertical acceleration sampling based on the first predicted track, the information about the interaction scenario, and a sampling limitation constraint, to obtain sampled data; and
generate the feasible track cluster of the obstacle based on the sampled data.

9. The apparatus according to claim 8, wherein the processing unit is further configured to:

determine, based on the information about the interaction scenario and a mapping relationship set corresponding to the information about the interaction scenario, a cost value of each evaluation dimension corresponding to each candidate predicted track in the feasible track cluster, wherein the mapping relationship set comprises at least one mapping relationship, and each mapping relationship comprises a mapping relationship between a preset evaluation dimension and a preset cost value; and
determine a cost value of each candidate predicted track based on the cost value of each evaluation dimension corresponding to each candidate predicted track in the feasible track cluster.

10. The apparatus according to claim 9, wherein the mapping relationship set corresponding to the information about the interaction scenario meets at least one of the following:

in the interaction scenario, a right of way of the obstacle is higher than a right of way of the vehicle, and a higher right of way of the obstacle indicates a larger cost value of a right of way corresponding to the candidate predicted track;
in the interaction scenario, a passability of the obstacle is higher than a passability of the vehicle, and a higher passability of the obstacle indicates a larger cost value of a passability corresponding to the candidate predicted track;
in the interaction scenario, safety of the obstacle is higher than safety of the vehicle, and higher safety of the obstacle indicates a larger cost value of safety corresponding to the candidate predicted track;
in the interaction scenario, comfort of the obstacle is higher than comfort of the vehicle, and higher comfort of the obstacle indicates a larger cost value of comfort corresponding to the candidate predicted track;
in the interaction scenario, a lower degree of attention of the obstacle on the vehicle indicates a larger cost value of attention corresponding to the candidate predicted track;
a lower changeability of a target type to which the obstacle belongs indicates a larger cost value of a target type corresponding to the candidate predicted track; and
a more dangerous target profile of the obstacle indicates a larger cost value of a target profile corresponding to the candidate predicted track.

11. The apparatus according to any one of claims 7 to 10, wherein the processing unit is specifically configured to:

generate, in an SL coordinate system based on the second predicted track, a first occupation area of the obstacle on an expected traveling path of the vehicle, and generate a horizontal offset constraint and a curvature radius constraint based on the first occupation area; and
generate, in an ST coordinate system based on the second predicted track, a second occupation area of the obstacle on the expected traveling path of the vehicle, and generate a speed constraint, an acceleration constraint, and an accelerated acceleration constraint based on the second occupation area.

12. The apparatus according to any one of claims 7 to 11, wherein the processing unit is further configured to:

when the obstacle is a non-game target, generate a spatial-temporal constraint of the vehicle based on the first predicted track; and

plan a traveling track of the vehicle based on the spatial-temporal constraint of the vehicle.

13. A track planning apparatus, comprising a memory and a processor, wherein the memory is configured to store instructions, and the processor is configured to execute the instructions stored in the memory, and execute the instructions stored in the memory, so that the processor performs the method according to any one of claims 1 to 6.

14. A vehicle, wherein the vehicle comprises the track planning apparatus according to any one of claims 7 to 12.

15. A computer-readable storage medium, wherein the computer-readable storage medium stores computer-readable instructions, and when a computer reads and executes the computer-readable instructions, the computer is enabled to perform the method according to any one of claims 1 to 6.

16. A computer program product, comprising computer-readable instructions, wherein when a computer reads and executes the computer-readable instructions, the computer is enabled to perform the method according to any one of claims 1 to 6.

Second vehicle

First vehicle

FIG. 1

Obtain a first predicted track of a target obstacle — 201

Generate a spatial-temporal constraint of a first vehicle based on the first predicted track and a type of the target obstacle — 202

Determine a track plan of the first vehicle based on the spatial-temporal constraint of the first vehicle — 203

FIG. 2

Vehicle 2

Vehicle 1

Intersection scenario

Illustration:    Ego-vehicle

Game target

FIG. 3

Obstacle crossing

Illustration:

Ego-vehicle

Game target

Non-game target

FIG. 4

Vehicle 2

Vehicle 1

Enter a same lane

Illustration:

Ego-vehicle

Game target

FIG. 5

Vehicle 2

Vehicle 3

Vehicle 1

Narrow lane passing

Illustration:

Ego-vehicle

Game target

Non-game target

FIG. 6

Vehicle 3

Vehicle 1                Vehicle 2

The ego-vehicle
enters a vehicle flow

Illustration:                     Ego-vehicle

                                  Game target

                                  Non-game target

FIG. 7

FIG. 8

FIG. 9

Vertical acceleration sampling

|  | −4 | −5 | −3 | −2 | −1 | 0 | 1 | 2 | 3 |
|---|---|---|---|---|---|---|---|---|---|
| 3 | … | … | … | … | … | … | … | … | … |
| 2 | … | … | … | … | … | … | … | … | … |
| 1 | … | … | … | … | … | … | … | … | … |
| 0 | … | … | … | … | … | … | … | … | … |
| −1 | … | … | … | … | … | … | … | … | … |
| −2 | … | … | … | … | … | … | … | … | … |
| −3 | … | … | … | … | … | … | … | … | … |

Horizontal offset sampling

FIG. 10

------------------- First predicted track

— — — — — Candidate predicted track

FIG. 11

FIG. 12

1300

Vehicle track planning apparatus

1302

Processor

1301

Memory

FIG. 13

## INTERNATIONAL SEARCH REPORT

| International application No. |
|---|
| **PCT/CN2021/126059** |

| A. | CLASSIFICATION OF SUBJECT MATTER |
|---|---|
| | B60W 30/08(2012.01)i; G08G 1/16(2006.01)i; G05D 1/02(2020.01)i |

According to International Patent Classification (IPC) or to both national classification and IPC

| B. | FIELDS SEARCHED |
|---|---|

Minimum documentation searched (classification system followed by classification symbols)

B60W, G08G, G05D

Documentation searched other than minimum documentation to the extent that such documents are included in the fields searched

Electronic data base consulted during the international search (name of data base and, where practicable, search terms used)

CNPAT, WPI, EPODOC, CNKI: 华为, 王新宇, 赵世杰, 魏正晨, 佘晓丽, 车辆, 障碍物, 躲避, 避让, 避障, 碰撞, 他车, 本车, 轨迹, 路径, 交互, vehicle, obstacle, avoid+, colli+, trajectory, path, track, obstacle w vehicle, interact+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110674723 A (BEIJING SANKUAI ONLINE TECHNOLOGY CO., LTD.) 10 January 2020 (2020-01-10) description, paragraphs [0003]-[0127], and figures 1-5 | 1-16 |
| A | CN 109213134 A (BAIDU ONLINE NETWORK TECHNOLOGY (BEIJING) CO., LTD.) 15 January 2019 (2019-01-15) entire document | 1-16 |
| A | CN 106527452 A (GUANGZHOU AUTOMOBILE GROUP CO., LTD.) 22 March 2017 (2017-03-22) entire document | 1-16 |
| A | CN 111965968 A (HUAWEI TECHNOLOGIES CO., LTD.) 20 November 2020 (2020-11-20) entire document | 1-16 |
| A | CN 109204311 A (HUAWEI TECHNOLOGIES CO., LTD.) 15 January 2019 (2019-01-15) entire document | 1-16 |
| A | CN 107168305 A (XI'AN JIAOTONG UNIVERSITY) 15 September 2017 (2017-09-15) entire document | 1-16 |
| A | CN 110362096 A (NORTHEASTERN UNIVERSITY) 22 October 2019 (2019-10-22) entire document | 1-16 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2022** | **27 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

27

**INTERNATIONAL SEARCH REPORT**

| International application No. |
| --- |
| **PCT/CN2021/126059** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2021114625 A1 (WERIDE CORP.) 22 April 2021 (2021-04-22)<br>entire document | 1-16 |

Form PCT/ISA/210 (second sheet) (January 2015)

**INTERNATIONAL SEARCH REPORT**
Information on patent family members

International application No.

**PCT/CN2021/126059**

| Patent document cited in search report | | | Publication date (day/month/year) | Patent family member(s) | | | Publication date (day/month/year) |
|---|---|---|---|---|---|---|---|
| CN | 110674723 | A | 10 January 2020 | WO | 2021052185 | A1 | 25 March 2021 |
| CN | 109213134 | A | 15 January 2019 | US | 2019004517 | A1 | 03 January 2019 |
| | | | | CN | 109213134 | B | 28 April 2020 |
| | | | | US | 10642268 | B2 | 05 May 2020 |
| CN | 106527452 | A | 22 March 2017 | CN | 106527452 | B | 05 November 2019 |
| CN | 111965968 | A | 20 November 2020 | None | | | |
| CN | 109204311 | A | 15 January 2019 | CN | 109204311 | B | 01 June 2021 |
| CN | 107168305 | A | 15 September 2017 | CN | 107168305 | B | 17 March 2020 |
| CN | 110362096 | A | 22 October 2019 | CN | 110362096 | B | 18 May 2021 |
| US | 2021114625 | A1 | 22 April 2021 | None | | | |

Form PCT/ISA/210 (patent family annex) (January 2015)